# EUROPEAN PATENT APPLICATION

(11) **EP 3 336 716 A1**
(43) Date of publication of application: **20.06.2018**
(21) Application number: 15903474.3
(22) Date of filing: 07.12.2015
(51) Int. Cl.: G06F 17/30

(54) **TRAVEL INFORMATION PUSHING METHOD AND DEVICE, AND STORAGE MEDIUM**

(30) Priority: 10.09.2015 CN 201510574887
(71) Applicant: Baidu Online Network Technology (Beijing) Co., Ltd, Beijing 100085 (CN)
(72) Inventor: LI, Zhitang, Beijing 100085 (CN)
(74) Representative: V.O.
(86) International application number: PCT/CN2015/096525
(87) International publication number: WO 2017/041371

(57) **Abstract**

A travel information pushing method and apparatus, and a storage medium. The method comprises: acquiring travel request information triggered due to scanning of an identification code on a ticket by a user terminal (S11) ; inquiring a database about travel notification information according to the travel request information (S12); and returning the inquired travel notification information to the user terminal (S13). The travel information pushing method and apparatus and the storage medium increase the amount of information acquired through scanning a bar code on the ticket by the user.

## Description

### CROSS-REFERENCE TO RELATED APPLICATION

This application claims the priority from Chinese Patent Application No. 201510574887.X, filed on September 10, 2015, entitled "Method and Apparatus for Pushing Travel Information," having Baidu Online Network Technology (Beijing) Co., Ltd. as the applicant, the entire disclosure of which is incorporated herein by reference.

### TECHNICAL FIELD

Embodiments of the present disclosure relate to the field of position-based service technology, and in particular to a method and an apparatus for pushing travel information, and a storage medium.

### BACKGROUND

Nowaday, a bar code is usually printed on the front a train or bus ticket. After buying the ticket, one can immediately know authenticity of his ticket by scanning the bar code printed on the front of the ticket. As smartphones become increasingly popular and scanning code software is widely used, this interaction mode is very convenient. Therefore, it is widely welcomed by the general public. However, this interaction mode also has its shortcomings. The main shortcoming is that the information obtained by a user from code scanning is limited to the authenticity of the ticket. That is to say, the amount of information obtained by the user from code scanning is relatively small.

### SUMMARY

In view of the above technical problems, embodiments of the present disclosure provide a method and an apparatus for pushing travel information, and a storage medium, in order to increase the amount of information obtained by the user from scanning the bar code on the ticket.

In a first aspect, the embodiment of the present disclosure provides a method for pushing travel information, and the method includes:
obtaining travel request information from a user terminal triggered by scanning an identification code on a ticket;
querying travel notification information in a database based on the travel request information; and
returning the travel notification information obtained by the querying to the user terminal.

In a second aspect, the embodiment of the present disclosure provides a device for pushing travel information, and the apparatus includes:
a request obtaining module for obtaining travel request information from a user terminal triggered by scanning an identification code on a ticket;
a notification query module for querying travel notification information in a background database based on the travel request information; and
a notification returning module for returning the travel notification information obtained by the querying to the user terminal.

In a third aspect, the embodiment of the present disclosure further provides a storage medium comprising computer-executable instructions executing a method for pushing travel information when executed by a computer processor, characterized in that the method comprising following steps:
obtaining travel request information from a user terminal triggered by scanning an identification code on a ticket;
querying travel notification information in a database based on the travel request information; and
returning the travel notification information obtained by the querying to the user terminal.

In a method and an apparatus for pushing travel information, and a storage medium provided by the embodiment of the present disclosure, the obtained information is not only limited to the authenticity of the ticket and the user can obtain the travel notification information about this travel after the user scans the bar code on the ticket so as to increase the amount of information obtained by scanning the code by the user by means of obtaining travel request information from a user terminal triggered by scanning an identification code on a ticket, querying the travel notification information in the database based on the travel request information, returning the travel notification information obtained by the querying to the user terminal.

### BRIEF DESCRIPTION OF THE DRAWINGS

Hereinafter, drawings used to describe the embodiments will be briefly introduced so as to explain the technical solutions in the embodiments of the present disclosure more clearly. Of course, the drawings described below are only some of the embodiments of the present disclosure; to those skilled in the art, these drawings may be subjected to modification and substitution without exercise of creative work.
Fig. 1 is a flowchart of a method for pushing travel information provided by a first embodiment of the present disclosure;
Fig. 2 is a flowchart of a method for pushing travel information provided by a second embodiment of the present disclosure;
Fig. 3 is a flowchart of a method for pushing travel information provided by a third embodiment of the present disclosure;
Fig. 4 is a flowchart of a method for pushing travel information provided by a fourth embodiment of the present disclosure;
Fig. 5 is a flowchart of a method for pushing travel information provided by a fifth embodiment of the present disclosure;
Fig. 6 is a schematic flowchart of a method for pushing travel information provided by a sixth embodiment of the present disclosure;
Fig. 7 is a structure diagram of an apparatus for pushing travel information provided by a seventh embodiment of the present disclosure; and

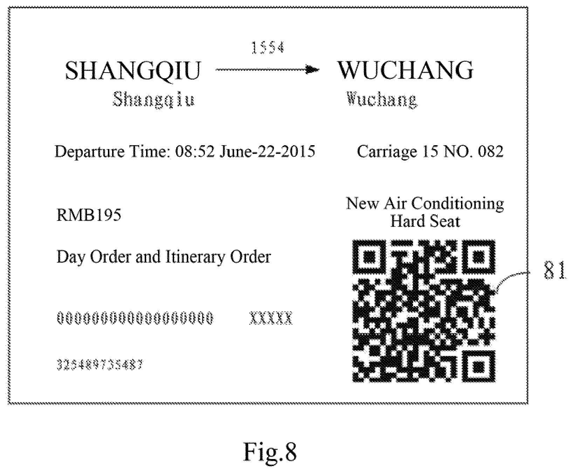

Fig. 8 is a schematic diagram showing a face of a ticket provided by a eighth embodiment of the present disclosure.

### DETAILED DESCRIPTION OF EMBODIMENTS

The technical solution provided by the embodiments of the present disclosure will be clearly and completely described below with reference to the accompanying drawings. Clearly, the described embodiments are some, rather than all of the embodiments of the present disclosure, and intended to illustrate the principles of the present disclosure, rather than limit the present disclosure to these specific embodiments. All other embodiments obtained by those skilled in the art, without creative effort and on the basis of the embodiments in the present disclosure, are within the scope of the present disclosure.

### First Embodiment

The present embodiment provides a technical solution of a method for pushing travel information. The method for pushing travel information is performed by an apparatus for pushing travel information. Moreover, the apparatus for pushing travel information is usually integrated into a server on a network side for providing Location-based service(LBS).

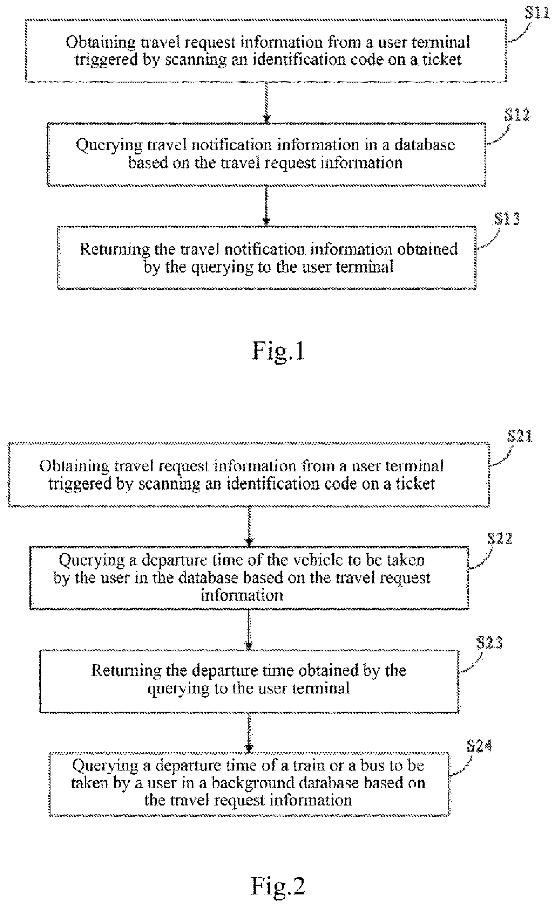

Referring to Fig. 1, the method for pushing travel information includes the following.

S11 is to obtain travel request information from a user terminal triggered by scanning an identification code on a ticket.

The user terminal is a handheld mobile computing terminal having a mobile communication function by a user. Preferably, the user terminal may be any one of a personal digital assistant(PDA), a smartphone, and a tablet. Moreover, the user terminal must be equipped with a camera, a laser bar code scanner, or other devices which may be used to scan a bar code. In addition, the user terminal should have a wireless data communication function. That is, the user terminal should keep a connection with Internet by its own wireless network connection and can perform uplink data communication or downlink data communication.

The wireless network connection of the user terminal may be a Wi-Fi network connection, a GPRS network connection, a 3G/4G network connection, even may be a Bluetooth communication connection or a Zigbee communication connection.

The ticket may be a bus ticket or a train ticket. No matter what kind of the vehicle ticket is, an identification code should be printed on the face of the ticket. Moreover, the identification code is able to uniquely identify the ticket. That is, in all tickets, a case that the identification codes printed on two tickets are exactly same will not occur.

The identification code includes a one-dimensional bar code and a two-dimensional bar code. More specifically, the identification code includes any one of a EAN-13 bar code, a Maxicode bar code, a PDF417 bar code, a DataMatrix bar code, and a QR bar code. Moreover, the identification code is not limited to the above several data forms as long as the data form has a good decoding accuracy rate and a good error correction capability and can be applied to actual situations.

In the present embodiment, after the user uses the user terminal to scan the identification code printed on the face of the ticket, the user terminal transmits the travel request information to a server. The travel request information is a kind of information which the user terminal transmits to the server for requesting various travel notification information from the server. Moreover, the transmission of the information is triggered once the user terminal performs a scanning operation to the bar code on the face of the ticket.

Preferably, the travel request information should at least include the information identified from the bar code which is able to uniquely identify the ticket. The information may be regarded as a ID code of the ticket. Based on the information, the user terminal may request more relevant information about the ticket from the server.

S12 is to query travel notification information in a database based on the travel request information.

The travel notification information refers to notification information related to the travel which a background database can provide for the user terminal. Specifically, the travel notification information includes an itinerary number of a train or a bus to be taken by a user, a departure time of a train or a bus to be taken by a user, location information of a departure station, and location information of a destination station.

The so-called itinerary number is an identification code which is able to uniquely identify a train or a bus and which is given to different trains or different buses. In a public transportation system, every train or every bus should have respective itinerary number information corresponding to itself.

In order to keep orderly running of the public transportation system, every train or every bus should have a departure time corresponding to itself. If the user can timely know the departure time, the user may be targeted to arrange his own itinerary.

In addition, in relation to each travel, whether a travel approach by railway is used or a travel approach by road is used, there should be a departure station and a destination station. If the user can know geographic positions of the departure station and the destination station or their surrounding situations in advance, it is advantageous for the user to arrange his own activities. For example, if the user knows in advance that there is a bank outlet or an ATM around the departure station, the user does not need to carry too much cash for a travel.

Correspondingly, the querying travel notification information in the database based on the travel request information includes at least one of: querying an itinerary number of a vehicle to be taken by a user in the database based on the travel request information, the vehicle including a bus or a train; querying a departure time of the vehicle to be taken by the user in the database based on the travel request information; querying location information of a departure station of the user in the database based on the travel request information; and querying location information of a destination station of the user in the database based on the travel request information.

Certainly, the travel notification information includes not only the above some information but also other information related to the travel. Correspondingly, actions obtaining the travel notification information also include not only the above several actions but also actions obtaining other travel notification information.

S13 is to return the travel notification information obtained by the querying to the user terminal.

After the travel notification information is queried from the background database, the travel notification information obtained by the querying is returned to the user terminal by Internet.

The present embodiment make it possible for the user no longer only to know authenticity information of his ticket but also to know the travel notification information with richer content by scanning the two-dimensional code so as to increase the amount of information obtained from scanning the bar code on the ticket by the user by means of the obtaining travel request information generated from scanning an identification code on a ticket by a user terminal; the querying travel notification information in a database based on the travel request information; and the returning the travel notification information obtained by the querying to the user terminal.

### Second Embodiment

The present embodiment further provides a technical solution of a method for pushing travel information on a basis of the above embodiment of the present disclosure. In the technical solution, the querying travel notification information in a database based on the travel request information is querying a departure time of a vehicle to be taken by a user in a background database based on the travel request information. Moreover, the method for pushing travel information also includes reminding the user of a travel plan based on the departure time.

Referring to Fig. 2, the method for pushing travel information includes following steps.

S21 is to obtain travel request information from a user terminal triggered by scanning an identification code on a ticket.

S22 is to query a departure time of a vehicle to be taken by a user in a database based on the travel request information.

In the present embodiment, the travel notification information specifically refers to a departure time of a train or a bus. Correspondingly, the action obtaining the travel notification information is specifically querying the departure time of a train or a bus in a database.

It should be noted that, the departure time is a departure time of a train or a bus according to a predetermined running plan.

S23 is to return the departure time obtained by the querying to the user terminal.

S24 is to remind the user of a travel plan based on the departure time.

For example, if the ticket bought by the user shows departing from this city at 11:30 am someday, the user may be reminded of the travel plan at a time point such as 9:30 am which is closed to the departure time namely 11:30 so as to avoid that the user misses the departure time of a train or a bus.

The present embodiment realizes reminding the user of the travel plan based on the departure time of a train or a bus so as to effectively avoid that the user misses the train or the bus by means of realizing obtaining the travel notification information by querying a departure time of a train or a bus to be taken by a user in a data based on the travel request information and reminding the user of a travel plan based on the departure time after returning the departure time obtained by the querying to the user terminal.

### Third Embodiment

The present embodiment further provides a technical solution of a method for pushing travel information on a basis of the above embodiments of the present disclosure. In the technical solution, the querying travel notification information in a database based on the travel request information is querying a departure time of a vehicle to be taken by a user in the database based on the travel request information. Moreover, the method for pushing travel information also includes pushing a weather condition to the user terminal based on the departure time.

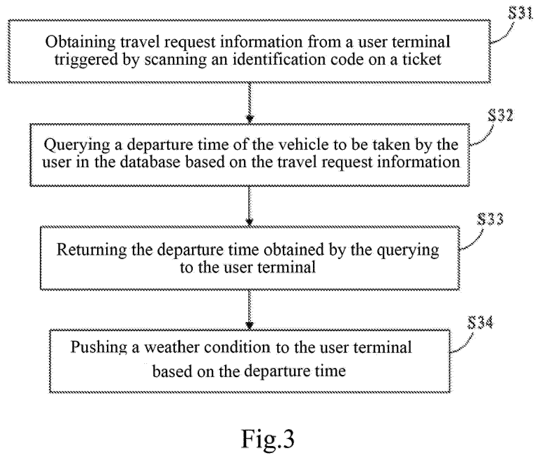

Referring to Fig. 3, the method for pushing travel information includes following steps.

S31 is to obtain travel request information from a user terminal triggered by scanning an identification code on a ticket.

S32 is to query a departure time of a vehicle to be taken by a user in a database based on the travel request information.

Being identical with the second embodiment of the present disclosure, in the present embodiment, the travel request information refers to a departure time of a train or a bus. Correspondingly, the action obtaining the travel notification information is an action obtaining the departure time.

S33 is to return the departure time obtained by the querying to the user terminal.

S34 is to push a weather condition to the user terminal based on the departure time.

If the departure time is given, a weather condition when a train or a bus departs may be queried. Specifically, a query request may be submitted to a relevant server based on the departure time to obtain the weather condition when a train or a bus departs. Moreover, after obtaining the weather condition, the obtained weather condition is pushed to the user terminal.

After the user terminal knows the weather condition, the user may arrange a transport approach which should be adopted to go to the departure station by himself based on the weather condition. For example, if it is under a thunderstorm, the user may choose a subway to go to the departure station so as to avoid that congestion may be encountered when the user travels by adopting a ground transport approach.

The present embodiment facilitates that the user chooses different transport approaches going to the departure station based on the weather condition at that time by means of realizing obtaining the travel notification information by querying a departure time of a train or a bus to be taken by a user in the data based on the travel request information and pushing a weather condition to the user terminal based on the departure time after returning the departure time obtained by the querying to the user terminal.

### Fourth Embodiment

The present embodiment further provides a technical solution of a method for pushing travel information on a basis of the above embodiments of the present disclosure. In the technical solution, the querying travel notification information in a database based on the travel request information is querying location information of a departure station of a user in the database based on the travel request information. Moreover, the method for pushing travel information further includes performing a route planning from a user position to the departure station based on the location information of the departure station and pushing a planned route to the user terminal.

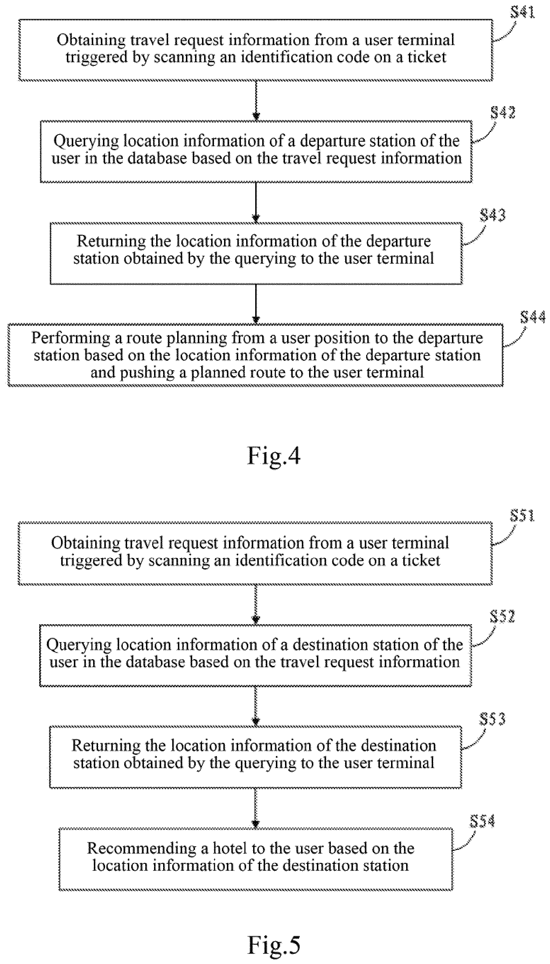

Referring to Fig. 4, the method for pushing travel information includes following steps.

S41 is to obtain travel request information from a user terminal triggered by scanning an identification code on a ticket.

S42 is to query location information of a departure station of a user in the database based on the travel request information.

The location information of the departure station refers to a geographic location of the departure station. Usually, it is a coordinate point of the geographic location formed by longitude data and latitude data or a set of coordinate points of the geographic location formed by different longitude data and latitude data.

It should be appreciated that every ticket corresponds a certain departure station. The departure station has a certain geographic location on an electronic map. The background database saves geographic location information of different departure stations. After the travel request information is obtained, querying the background database based on the travel request information may obtain the location information of the departure station.

S43 is to return the location information of the departure station obtained by the querying to the user terminal.

S44 is to perform a route planning from a user position to the departure station based on the location information of the departure station and pushing a planned route to the user terminal.

It should be appreciated that when the user is going to travel by train or bus, it is necessary to go to the departure station so that the user can take his train or his bus. However, going to the departure station usually needs a distance. In a typical situation, the user will choose a station in a city where the user lives as the departure station. There are usually a plurality of routes from a home or a company of the user to the departure station. It is necessary to perform a route planning from the position of the user to the departure station in order that the user can reach the departure station conveniently and quickly.

It should be appreciated that the route going to the departure station may be planned by a plurality of planning strategies such as a least time strategy and a least transfer times strategy. When the route planning is performed, a planning strategy may be specifically chosen based on requirements of the user.

After the route planning is finished based on the certain planning strategy, the planned route is pushed to the user terminal.

The present embodiment facilitates significantly the travel of the user going to the departure station by means of realizing obtaining the travel notification information by querying location information of a departure station of a user in the database based on the travel request information and performing the route planning from the user position to the departure station based on the location information of the departure station after returning the location information of the departure station obtained by the querying to the user terminal and pushing the planned route to the user terminal.

### Fifth embodiment

The present embodiment further provides a technical solution of a method for pushing travel information on a basis of the above embodiments of the present disclosure. In the technical solution, the querying travel notification information in a database based on the travel request information is querying location information of a destination station of a user in the database based on the travel request information. Moreover, the method for pushing travel information also includes recommending a hotel to the user based the location information of the destination station.

Referring to Fig. 5, the method for pushing travel information includes following steps.

S51 is to obtain travel request information from a user terminal triggered by scanning an identification code on a ticket.

S52 is to query location information of a destination station of the user in the database based on the travel request information.

Generally speaking, the destination station of the user is in a destination city which the user needs to go to. If the location information of the destination station can be known in advance, it helps the user arrange various activities in the destination city.

Being identical with the location information of the departure station, the location information of the destination station also is a coordinate point of geographic location formed by longitude data and latitude data or a set of coordinate points of geographic location formed by different longitude data and latitude data.

S53 is to return the travel notification information obtained by the querying to the user terminal.

S54 is to recommend a hotel to the user based on the location information of the destination station.

Preferably, a hotel which is close to the destination station in the destination city may be chosen and recommended to the user. In addition, a hotel with a convenient vehicle which can be taken by a user between the destination station and the hotel may be also chosen and recommended to the user.

The present embodiment facilitates the travel of the user going to the departure station by means of realizing obtaining the travel notification information by querying location information of a destination station of a user in the database based on the travel request information and recommending a hotel to the user based on the location information of the destination station after returning the location information of the departure station obtained by the querying to the user terminal.

### Sixth Embodiment

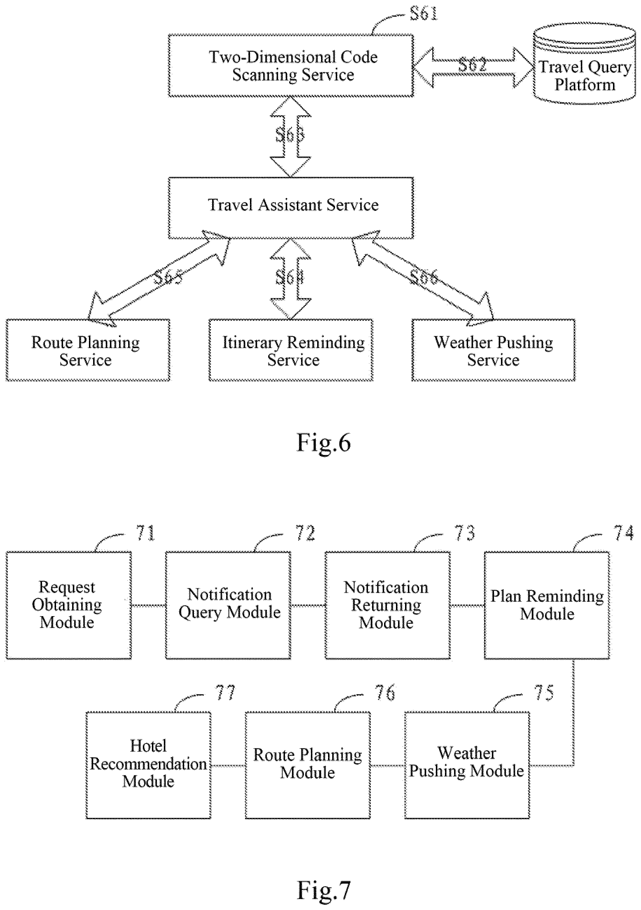

The present embodiment provides a technical solution of a method for pushing travel information. Referring to Fig. 6, in the technical solution, the method for pushing travel information includes following steps.

S61 is to identify a two-dimensional code scanned by a user terminal so as to obtain ticket identification information included in the two-dimensional code.

In the present embodiment, the identification code no longer includes a one-dimensional bar code and but only includes a two-dimensional bar code, called the two-dimensional code for short.

Moreover, in the present embodiment, the user terminal is only in charge of providing collected bar code images. Identifying bar code image, namely, identifying the two-dimensional code image is performed by a server. It should be appreciated that the server uses different types of two-dimensional code identification algorithms based on the different types of the two-dimensional codes.

S62 is to query a travel query platform based on the ticket identification information to obtain travel notification information.

The travel notification information includes an itinerary number and a departure time of a train or a bus, location information of a departure station, and location information of a destination station.

Preferably, the travel query platform includes a background relational database. Obtaining the travel notification information may be realized by querying the background relational database.

S63 is to show the user the travel notification information.

After the travel notification information is queried and obtained, the travel notification information is showed to the user. Preferably, the travel notification information may be showed to the user by character forms or icon forms.

S64 is to provide an itinerary reminding service for the user based on the travel notification information.

Specifically, the itinerary reminding service may be provided for the user based on the departure time information in the travel notification information.

S65 is to provide a route planning service for the user based on the travel notification information.

Specifically, the route planning service may be provided for the user based on the geographic location information of the departure station or the destination station included in the travel notification information so that the user can arrive at the departure station or the hotel close to the destination station more conveniently.

S66 is to provide a weather pushing service for the user based on the travel notification information.

Specifically, the weather pushing service may be provided for the user based on the departure time included in the travel notification information.

The present embodiment increases the amount of information obtained by scanning the bar code on the ticket by the user by means of scanning the two-dimensional code image collected by the user terminal, querying the travel query platform, obtaining the travel notification information, showing the user the travel notification information and providing the itinerary reminding service, the route planning service, and the weather pushing service for the user based on the travel notification information.

### Seventh Embodiment

The present embodiment provides a technical solution of an apparatus for pushing travel information. Referring to Fig. 7, in the technical solution, the apparatus for pushing travel information includes a request obtaining module 71, a notification query module 72, and a notification returning module 73.

The request obtaining module 71 is used to obtain travel request information from a user terminal triggered by scanning an identification code on a ticket.

The notification query module 72 is used to query travel notification information in a database based on the travel request information.

The notification returning module 73 is used to return the travel notification information obtained by the querying to the user terminal.

Further, the notification query module 72 includes at least one of an itinerary number query unit, a time query unit, a departure location query unit and a destination location query unit.

The itinerary number query unit is used to query an itinerary number of a vehicle to be taken by a user in the database based on the travel request information, characterized in that the vehicle includes a bus or a train.

The time query unit is used to query a departure time of the vehicle to be taken by the user in the database based on the travel request information.

The departure location query unit is used to query location information of a departure station of the user in the database based on the travel request information.

The destination location query unit is used to query location information of a destination station of the user in the database based on the travel request information.

Further, the apparatus for pushing travel information also includes a plan reminding module 74.

The plan reminding module 74 is used to remind the user of a travel plan based on the departure time if the notification query module includes the time query unit.

Further, the apparatus for pushing travel information also includes a weather pushing module 75.

The weather pushing module 75 is used to push a weather condition to the user terminal based on the departure time if the notification query module includes the time query unit.

Further, the apparatus for pushing travel information also includes a route planning module 76.

The route planning module 76 is used to perform the route planning from the user position to the departure station based on the location information of the departure station and push the planned route to the user terminal if the notification query module includes the departure location query unit.

Further, the apparatus for pushing travel information also includes a hotel recommendation module 77.

The hotel recommendation module 77 is used to recommend a hotel to the user based on the location information of the destination station if the notification query module includes the destination location query unit.

The above-described apparatus for pushing travel information may execute the method for pushing travel information provided by any one of the embodiments of the present disclosure and have the functional modules corresponding to the execution method and the beneficial effects.

It will be understood by the skilled in the art that each of the modules or steps of the present disclosure described above may be implemented by a general computing apparatus which may be centralized on a single computing device or distributed over a network of a plurality of computing devices. Optionally, they may be implemented by program code executable by the computer device so that they may be stored in a storage device and executed by a computing device, or they may be separately made into respective integrated circuit modules, or a plurality of modules or steps may be implemented into a single integrated circuit module. Thus, the present disclosure is not limited to any particular combination of hardware and software.

### Eighth Embodiment

The present embodiment provides a technical solution of a ticket. In the technical solution, besides general information such as a departure station name, a destination station name, an itinerary number, a departure time and others printed on the ticket, a bar code 81 printed on the ticket. The bar code 81 may be a one-dimensional bar code or a two-dimensional bar code. The bar code 81 has identification information of the ticket and instruction information for generating the travel request information.

### Ninth Embodiment

A storage medium comprising computer-executable instructions executing a method for pushing travel information when executed by a computer processor, characterized in that the method comprising following steps:
obtaining travel request information generated from scanning an identification code on a ticket by a user terminal;
querying travel notification information in a database based on the travel request information; and
returning the travel notification information obtained by the querying to the user terminal.

When the above storage medium performs the method, the querying travel notification information in a database based on the travel request information includes at least one of:
querying an itinerary number of a vehicle to be taken by a user in the database based on the travel request information, the vehicle including a bus or a train;
querying a departure time of a vehicle to be taken by the user in the database based on the travel request information;
querying location information of a departure station of the user in the database based on the travel request information; and
querying location information of a destination station of the user in the database based on the travel request information.

When the above storage medium performs the method, if the querying travel notification information in a database based on the travel request information is the querying a departure time of a vehicle to be taken by a user in a data based on the travel request information, the method further includes reminding the user of a travel plan based on the departure time.

When the above storage medium performs the method, if the querying travel notification information in a database based on the travel request information is the querying a departure time of a vehicle to be taken by a user in the database based on the travel request information, the method further includes pushing a weather condition to the user terminal based on the departure time.

When the above storage medium performs the method, if the querying travel notification information in a database based on the travel request information is the querying location information of a departure station of a user in the database based on the travel request information, the method further includes performing a route planning from a user position to the departure station based on the location information of the departure station and pushing a planned route to the user terminal.

When the above storage medium performs the method, if the querying travel notification information in a database based on the travel request information is the querying location information of a destination station of the user in the database based on the travel request information, the method further includes recommending a hotel to the user based on the location information of the destination station.

Through the description of the foregoing implementations, a person skilled in the art may clearly know that the present disclosure may be implemented by means of software and necessary general hardware or of course by means of hardware, but in most cases the former is the better implementation manner. Based on such an understanding, the technical solutions of the present disclosure in essence or that part of contribution to the prior art may be embodied in the form of software products, which may be stored in computer-readable storage media, such as floppy disk, optical disk, read-only memory (ROM) or random access memory (RAM), including some instructions so that a computer device (a personal computer, a server, or a network device, etc.) is caused to perform the methods as recited in each embodiment of the present disclosure.

It is to be noted that in the embodiments of the device for pushing travel information described above, the included respective modules and sub-modules are divided according to the functional logics, but not limited to the above-described division, as long as the corresponding function may be achieved. In addition, the specific name of each of functional units is merely for ease of mutual distinction and is not intended to limit the scope of the present disclosure.

The foregoing is only a preferred embodiment of the present disclosure and is not intended to limit the invention, it will be apparent to those skilled in the art that various changes and modifications may be made therein. Any modifications, equivalent substitutions, improvements, and the like within the spirit and principle of the present disclosure are included in the scope of the present disclosure.

## Claims

1. A method for pushing travel information, **characterized in that** the method comprises:
obtaining travel request information from a user terminal triggered by scanning an identification code on a ticket;
querying travel notification information in a database based on the travel request information; and
returning the travel notification information obtained by the querying to the user terminal.

2. The method according to claim 1, **characterized in that** the querying travel notification information in a database based on the travel request information comprising at least one of:
querying an itinerary number of a vehicle to be taken by a user in the database based on the travel request information, the vehicle including a bus or a train;
querying a departure time of the vehicle to be taken by the user in the database based on the travel request information;
querying location information of a departure station of the user in the database based on the travel request information; and
querying location information of a destination station of the user in the database based on the travel request information.

3. The method according to claim 2, **characterized in that** if the querying travel notification information in a database based on the travel request information is the querying a departure time of the vehicle to be taken by the user in the database based on the travel request information, the method further comprising:
reminding the user of a travel plan based on the departure time.

4. The method according to claim 2, **characterized in that** if the querying travel notification information in a database based on the travel request information is the querying a departure time of the vehicle to be taken by the user in the database based on the travel request information, the method further comprising:
pushing a weather condition to the user terminal based on the departure time.

5. The method according to claim 2, **characterized in that** if the querying travel notification information in a database based on the travel request information is the querying location information of a departure station of the user in the database based on the travel request information, the method further comprising:
performing a route planning from a user position to the departure station based on the location information of the departure station and pushing a planned route to the user terminal.

6. The method according to claim 2, **characterized in that** if the querying travel notification information in a database based on the travel request information is the querying location information of a destination station of the user in the database based on the travel request information, the method further comprising:
recommending a hotel to the user based on the location information of the destination station.

7. An apparatus for pushing travel information, **characterized in that** the device comprises:
a request obtaining module for obtaining travel request information from a user terminal triggered by scanning an identification code on a ticket;
a notification query module for querying travel notification information in a database based on the travel request information; and
a notification returning module for returning the travel notification information obtained by the querying to the user terminal.

8. The apparatus according to claim 7, **characterized in that** the notification query module comprising at least one of:
an itinerary number query unit for querying an itinerary number of a vehicle to be taken by a user in the database based on the travel request information, the vehicle including a bus or a train;
a time query unit for querying a departure time of the vehicle to be taken by the user in the database based on the travel request information;
a departure location query unit for querying location information of a departure station of the user in the database based on the travel request information; and
a destination location query unit for querying location information of a destination station of the user in the database based on the travel request information.

9. The apparatus according to claim 8, **characterized in that** the apparatus further comprising:
a plan reminding module for reminding the user of a travel plan based on the departure time if the notification query module includes the time query unit.

10. The apparatus according to claim 8, **characterized in that** the apparatus further comprising:
a weather pushing module for pushing a weather condition to the user terminal based on the departure time if the notification query module includes the time query unit.

11. The apparatus according to claim 8, **characterized in that** the apparatus further comprising:
a route planning module for performing a route planning from a user position to the departure station based on the location information of the departure station and pushing a planned route to the user terminal if the notification query module includes the departure location query unit.

12. The apparatus according to claim 8, **characterized in that** the apparatus further comprising:
a hotel recommendation module for recommending a hotel to the user based on the location information of the destination station if the notification query module includes the destination location query unit.

13. A storage medium comprising computer-executable instructions executing a method for pushing travel information when executed by a computer processor, **characterized in that** the method comprises following steps:
obtaining travel request information from a user terminal triggered by scanning an identification code on a ticket;
querying travel notification information in a database based on the travel request information; and
returning the travel notification information obtained by the querying to the user terminal.
